# EUROPÄISCHE PATENTANMELDUNG

(11) **EP 4 406 723 A1**
(43) Veröffentlichungstag der Anmeldung: **31.07.2024**
(21) Anmeldenummer: 23214530.0
(22) Anmeldetag: 06.12.2023
(51) Int. Cl.: B29C 49/42, B29C 49/78, B29C 49/06, B29C 49/12, B29C 49/36, B29C 49/46, B29L 31/00

(54) **VORRICHTUNG UND VERFAHREN ZUM UMFORMEN VON KUNSTSTOFFVORFORMLINGEN ZU KUNSTSTOFFBEHÄLTNISSEN MIT AUTOMATISIERTER DROSSELVERSTELLUNG**

(30) Priorität: 25.01.2023 DE 102023101832
(71) Anmelder: Krones AG, 93073 Neutraubling (DE)
(72) Erfinder: Hoellriegl, Thomas, 93073 Neutraubling (DE)
(74) Vertreter: Bittner, Bernhard

(57) **Zusammenfassung**

Vorrichtung zum Umformen von Kunststoffvorformlingen (10) zu Kunststoffbehältnissen, mit einer Transporteinrichtung (2), welche die Kunststoffvorformlinge (10) entlang eines vorgegebenen Transportpfads transportiert, wobei die Transporteinrichtung (2) einen Transportträger (22) aufweist, an dem eine Vielzahl von Umformungsstationen (20) zum Umformen der Kunststoffvorformlinge (10) aufweist, wobei diese Umformungsstationen jeweils Beaufschlagungseinrichtungen (84) aufweisen, welche die Kunststoffvorformlinge zu ihrer Expansion mit einem fließfähigen und insbesondere gasförmigen Medium beaufschlagen und wobei die Vorrichtung (1) wenigstens ein erstes Druckluftreservoir (32) aufweist, welches dazu geeignet und bestimmt ist, Druckluft unter einem ersten vorgegebenen Druck zu speichern sowie ein zweites Druckluftreservoir, welches dazu geeignet und bestimmt ist, Druckluft unter einem zweiten vorgegebenen Druck (p2) zu speichern und jede Umformungsstation (20) eine Ventilanordnung (4) mit einer Vielzahl von Ventileinrichtungen (52, 54) aufweist, um die Kunststoffvorformlinge mit den wenigstens zwei Drücken zu beaufschlagen und wobei die Umformungsstationen jeweils wenigstens eine Drosseleinrichtung (6) aufweisen, welche dazu geeignet und bestimmt ist den Volumenstrom des gasförmigen Mediums zu den Kunststoffvorformlingen (10) zu drosseln, dadurch gekennzeichnet, dass die Drosseleinrichtung (6) automatisch verstellbar ist.

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt.

Dabei ist es bekannt, dass erwärmte Kunststoffvorformlinge in Blasformen eingegeben werden und innerhalb dieser Blasformen durch Beaufschlagung mit einem gasförmigen Medium und insbesondere Druckluft zu Kunststoffflaschen expandiert werden. Dieser Expansionsvorgang ist dabei relativ aufwendig und erfolgt üblicherweise in unterschiedlichen Druckstufen. Zu diesem Zweck ist es bekannt, dass Druckluftreservoirs vorgesehen sind, welche die Druckluft in unterschiedlichen Druckniveaus speichern und auf diese Weise die Beaufschlagung der Kunststoffvorformlinge mit unterschiedlichen Druckniveaus gesteuert werden kann.

Daneben ist es aus dem Stand der Technik auch bekannt, bei einzelnen oder auch mehreren der Druckniveaus Drosseln zu verwenden, die insbesondere einstellbar sind.

Bei neueren Umformungsvorrichtungen wird das Behältnis mit wenigstens drei Druckstufen aufgeblasen, wobei davon zwei mit recycelter Luft vorzugsweise voll oder auch teilweise versorgt werden. Bei einer neueren Generation kommt auch noch eine weitere Druckstufe (Pi2) dazu, welche bevorzugt ebenfalls mit recycelter Luft versorgt wird.

Die niedrigste Druckstufe ist dabei üblicherweise ein Druck P1 (Vorblasen), welcher sich bei 5-15 bar Druck je nach Behältnis und Prozess bewegt. Teilweise wird noch der an einem Ventilblock jeder Umformungsstation verbleibende Druck über ein Auslassventil (Exhaust) und in einen nachgeschalteten Schalldämpfer entlüftet.

Wie in aktuellen Untersuchungen ermittelt wurde ist besonders bedeutsam der Vorgang des Vorblasens der Kunststoffvorformlinge, da dieser sich auf die spätere Gestalt der Behältnisse deutlich auswirkt. Bei diesem Vorblasen wird die notwendige Luftmenge mittels des Druckes und einer Zuluftdrossel geregelt bzw. bestimmt. Um diese Luftmenge exakt gleich zu haben, bedient man sich zwischen den an einem Blasrad angesiedelten Blasstationen einer Zuluftblende, die üblicherweise als feste Bohrung ausgeführt wird und sich üblicherweise bzw. vorzugsweise vor dem Vorblasventil befindet.

Dabei ist es aus dem internen Stand der Technik der Anmelderin bekannt, dass diese Drossel bzw. ein Querschnitt dieser Drossel, durch einen Benutzer verstellbar ist. Dafür können mehrere Querschnitte zur Verfügung stehen, die manuell einstellbar sein können.

Dabei kann es allerdings bei Umstellungen der Vorrichtung beispielsweise auf ein anderes Behältnisformat dazu kommen, dass eine derartige Einstellung übersehen wird und auf diese Weise Behältnisse schlechterer Qualität gefertigt werden.

Der vorliegenden Erfindung liegt daher die Aufgabe zugrunde, bei derartigen Umformungsvorrichtungen, die eine Vielzahl von Umformungsstationen aufweisen eine gleichbleibende Qualität der gefertigten Behältnisse sicherzustellen. Dies wird erfindungsgemäß durch die Gegenstände der unabhängigen Patentansprüche erreicht. Vorteilhafte Ausführungsform und Weiterbildungen sind Gegenstand der Unteransprüche.

Eine erfindungsgemäße Vorrichtung zum Umformen von Kunststoffvorformlingen zu Kunststoffbehältnissen weist eine Transporteinrichtung auf, welche die Kunststoffvorformlinge entlang eines vorgegebenen Transportpfads transportiert. Dieser Transportpfad ist bevorzugt kreisförmig. Dabei weist die Transporteinrichtung einen drehbaren Transportträger auf, an dem eine Vielzahl von Umformungsstationen zum Umformen der Kunststoffvorformlinge angeordnet ist, wobei diese Umformungsstationen jeweils Beaufschlagungseinrichtungen aufweisen, welche die Kunststoffvorformlinge zu ihrer Expansion mit einem fließfähigen und insbesondere gasförmigen Medium beaufschlagen.

Weiterhin weist die Vorrichtung wenigstens ein erstes Druckluftreservoirs auf, welches dazu geeignet und bestimmt ist, Druckluft unter einem ersten vorgegebenen Druck zu speichern und/oder bereitzustellen sowie ein zweites Druckluftreservoir, welches dazu geeignet und bestimmt ist, Druckluft unter einem zweiten vorgegebenen Druck zu speichern.

Weiterhin weist jede Umformungsstation eine Ventilanordnung mit einer Vielzahl von Ventileinrichtungen auf, um die Kunststoffvorformlinge mit den wenigstens zwei Drücken zu beaufschlagen. Weiterhin weist die Umformungsstation jeweils wenigstens eine Drosseleinrichtung auf, welche dazu geeignet und bestimmt ist, den Volumenstrom (des gasförmigen Mediums) zu den Kunststoffvorformlingen zu drosseln.

Erfindungsgemäß ist die Drosseleinrichtung automatisch verstellbar.

Wie oben erwähnt kann, um auf unterschiedliche Prozesse zu reagieren, ein Drosselquerschnitt verändert werden. Dafür stehen bevorzugt mehrere Querschnitte zur Verfügung, die derart angeordnet oder ausgebildet sind, dass die jeweilige Drossel bzw. der jeweilige Drosselquerschnitt - insbesondere durch eine Verdrehung oder Verstellung - aktiviert oder deaktiviert werden kann. Im Stand der Technik erfolgte diese Umstellung manuell bei einem Sorten- oder Prozesswechsel.

Erfolgt jedoch ein Sortenwechsel automatisiert, beispielsweise über einen Wechselroboter war es im Stand der Technik teilweise erforderlich ist, ist es mit Problemen verbunden, die Drossel manuell von einem Bediener verstellen zu lassen. Diese Tätigkeit könnte auch vergessen werden, oder es wurde aus Versehen eine falsche Einstellung bzw. ein falscher Drosselquerschnitt gewählt, was zu Störungen der Maschine und zur weiteren Produktionsunterbrechungen führen konnte.

Während im Stand der Technik noch ein gewisser Zeitaufwand für die Umstellungen an allen Umformungsstationen erforderlich war, was zu Steigerung von Stillstandzeiten geführt hat, wird nunmehr vorgeschlagen, eine automatisierte Umstellung dieser Drosseleinrichtung vorzunehmen. Auf diese Weise kann auch dem Problem entgegengewirkt werden, dass bei der Umstellung der Drosseleinrichtung durch den Bediener Fehler auftreten oder er auch die erforderliche Umstellung vollständig vergisst oder diese nur für einige Umformungsstationen durchführt.

Daneben war im Stand der Technik auch zum Umstellen aller Blasstationen ein Öffnen der Maschine erforderlich, was ebenfalls nunmehr vermieden werden kann.

Bei einer bevorzugten Ausführungsform ist die Drosseleinrichtung, beispielsweise eine Vorblasdrossel an der Ventilanordnung, derart angeordnet, dass sie bevorzugt von außen (in radialer Richtung) oder von oben an der Ventilanordnung leicht erreichbar ist.

Dabei ist die Drosseleinrichtung hinsichtlich des Luftvolumenstroms, der diese Drosselrichtung passiert, verstellbar. Unter einer automatischen Verstellung wird insbesondere verstanden, dass zur Verstellung der Drosseleinrichtung kein manueller Benutzereingriff erforderlich ist, sondern diese, wie unten genauer beschrieben durch geeignete Antriebseinrichtungen erfolgt.

Bei einer weiteren bevorzugten Ausführungsform weisen die Umformungsstationen jeweils Blasformen und insbesondere mehrteilige und insbesondere dreiteilige Blasformen auf, innerhalb derer die Kunststoffvorformlinge umgeformt werden.

Besonders bevorzugt, sind die wenigstens zwei Druckluftreservoirs mit den einzelnen Ventilanordnungen der Umformungsstationen verbunden. Die Ventileinrichtungen können damit eine Strömungsverbindung zwischen einem Reservoir und der jeweiligen Umformungsstation herstellen und/oder unterbrechen.

Bei einer weiteren vorteilhaften Ausführungsform sind die Druckluftreservoirs als Kanäle und insbesondere Ringkanäle ausgebildet. Diese Reservoirs und insbesondere Ringkanäle sind insbesondere an dem Transportträger angeordnet.

Bei einer bevorzugten Ausführungsform wäre es denkbar, dass jede Drosseleinrichtung einen eigenen Antrieb, wie etwa einen eigenen Motor aufweist. Besonders bevorzugt ist jedoch eine zentrale Steuerung vorgesehen, welche unten genauer beschrieben wird und welche die Umstellung der Drosseleinrichtungen ermöglicht.

Bei einer weiteren vorteilhaften Ausführungsform ist der erste Druck geringer als der zweite vorgegebene Druck. Dabei ist bevorzugt die Drosseleinrichtung der ersten Druckstufe zugeordnet. Bei dieser ersten Druckstufe handelt es sich insbesondere um den Vorblasdruck, mit dem die Expansion der Kunststoffvorformlinge eingeleitet wird. Damit steuert bevorzugt die Drosseleinrichtung die Beaufschlagung der Kunststoffvorformlinge mit dem ersten, d. h. insbesondere dem geringsten Druck.

Bei einer weiteren vorteilhaften Ausführungsform weisen die Umformungsstationen jeweils in die Kunststoffvorformlinge einführbare stangenartige Körper zum Dehnen der Kunststoffvorformlinge in deren Längsrichtung auf. Bei diesen stangenartigen Körpern, auch als Reckstangen bezeichnet, handelt sich damit um Elemente, welche die Kunststoffvorformlinge zusätzlich zu deren Beaufschlagung mit Druckluft in ihrer Längsrichtung dehnen.

Bei einer bevorzugten Ausführungsform weisen diese stangenartigen Körper bzw. Reckstangen jeweils Antriebseinrichtungen auf, welche die Bewegung der Reckstangen, insbesondere in der Längsrichtung der Behältnisse steuern bzw. antreiben.

Dabei kann beispielsweise die Bewegung der Reckstangen mittels Führungskurven erfolgen, bevorzugt ist jedoch den einzelnen Reckstangen jeweils eine Motoreinrichtung und insbesondere ein Linearmotor zugeordnet.

Bei einer weiteren bevorzugten Ausführungsform weist die Vorrichtung ein drittes Druckluftreservoirs auf, welches dazu geeignet und bestimmt ist, Druckluft unter einem dritten vorgegebenen Druck (PI) zu speichern, wobei dieser dritte Druck bevorzugt höher ist als der erste Druck. Besonders bevorzugt ist dieser dritte Druck jedoch kleiner als der zweite Druck. Bei dieser Ausgestaltung werden die Kunststoffvorformlinge mit drei Druckstufen beaufschlagt, insbesondere einem Vorblasdruck, einem Zwischenblasdruck und einem Fertigblasdruck.

Bei einer weiteren vorteilhaften Ausführungsform weist die Vorrichtung ein viertes Druckluftreservoirs auf, welches dazu geeignet und bestimmt ist, Druckluft unter einem vierten vorgegebenen Druck (Pi2) zu speichern, wobei dieser vierte Druck bevorzugt höher ist als der dritte Druck und bevorzugt geringer als der zweite Druck. Bei dieser Ausgestaltung werden die Kunststoffvorformlinge mit insgesamt vier Druckluftstufen beaufschlagt.

Bei einer weiteren vorteilhaften Ausführungsform weist die Vorrichtung wenigstens eine Verstelleinrichtung zum automatischen Verstellen der Drosseleinrichtungen auf, wobei besonders bevorzugt jeder Umformungsstation ein erstes Verstellelement dieser Verstelleinrichtung zugeordnet ist.

Bei einer weiteren vorteilhaften Ausführungsform weist die Vorrichtung ein zweites Verstellelement auf, welches zum Verstellen der Drosseleinrichtung mit dem ersten Verstellelementen zusammen wirkt. Bei dieser Ausgestaltung ist damit bevorzugt jeder Umformungsstation ein solches Verstellelement zugeordnet. Ein zweites Verstellelement, welches beispielsweise stationär angeordnet sein kann, bewirkt in Zusammenwirkung mit dem ersten Verstellelementen bevorzugt eine Einstellung, bzw. Verstellung der Drosseleinrichtung.

Bei einer bevorzugten Ausführungsform ist das zweite Verstellelement zentral oder stationär. Daneben kann es sich beim zweiten Stellelement auch um eine Robotereinrichtung handeln, welche mit den einzelnen Umformungsstationen (und insbesondere deren ersten Verstellelementen zusammenwirken kann.

Bei einer weiteren vorteilhaften Ausführungsform wirkt das zweite Verstellelement mit mindestens zwei ersten Verstellelementen unterschiedlicher Umformungsstationen zusammen und wirkt bevorzugt mit allen ersten Verstellelementen aller Umformungsstationen zusammen.

Bei einer weiteren bevorzugten Ausführungsform ist die Verstellung der Drosseleinrichtungen unter Verwendung der Drehbewegung des Transportträgers durchführbar. Wie oben erwähnt, ist bevorzugt der Transportträger drehbar. Auf diese Weise ist es möglich, ein zentrales Stellelement besonders bevorzugt stationär anzuordnen, an dem sich die einzelnen Umformungsstationen vorbei bewegen. Durch diese Relativbewegung wird bevorzugt auch eine Verstellung der Drosseleinrichtung bewirkt.

Bei einer weiteren bevorzugten Ausführungsform ist das erste Verstellelement bezüglich einer vorgegebenen Achse dreh- und/oder schwenkbar. Bevorzugt erstreckt sich dabei diese Achse in einer radialen Richtung des Transportträgers oder senkrecht zu dieser radialen Richtung. Auf diese Weise kann in besonders einfacher Weise eine Verstellung der Drosseleinrichtung bewirkt werden.

Bei einer weiteren vorteilhaften Ausführungsform weist das zweite Verstellelement eine Antriebseinrichtung auf, welche dazu geeignet und bestimmt ist, einen Verstellkörper des zweiten Verstellelements zu bewegen. Dabei ist es möglich, dass durch diese Bewegung ein Eingriff zwischen dem zweiten Verstellelement und dem ersten Verstellelement hergestellt oder verhindert wird.

Besonders bevorzugt handelt es sich bei dieser Bewegung des Verstellkörpers um eine Linearbewegung. Besonders bevorzugt handelt es sich bei der Antriebseinrichtung um einen Motor und insbesondere einen Linearmotor.

Dabei ist es möglich, dass der Verstellkörper zwischen wenigstens zwei Stellungen bewegbar ist, wobei eine Stellung einen Eingriff mit dem ersten Verstellelement bewirkt, und bevorzugt die zweite Stellung außerhalb dieses Eingriffs liegt bzw. einen Eingriff verhindert.

Besonders bevorzugt ist der Verstellkörper in wenigstens drei Positionen verstellbar. Bei einer ersten Position ist es möglich, dass ein Eingriff mit allen oder mehreren Bereichen des ersten Verstellelements bewirkt wird, in der zweiten Position nur mit einigen Elementen des Verstellelements und in der dritten Position wird ein Eingriff verhindert.

Bei einer besonders bevorzugten Ausführungsform weist die Vorrichtung eine Erfassungseinrichtung und/oder Abfrageeinrichtung zur Erfassung oder Abfrage einer Position des ersten Stellelements der einzelnen Umformungsstationen auf. Dabei kann sich jedoch diese Abfrage auch aus der Art des ersten und/oder zweiten Stellelements ergeben.

Daneben ist es jedoch auch möglich, durch eine geeignete Auslegung der Verstellkörper und der Verstellelemente auf eine Positionserkennung zu verzichten.

Der oben erwähnte Verstellkörper kann asymmetrisch ausgeführt sein, so dass ein Stellelement nicht jede Stellung erreichen kann. Zum Beispiel kann das Malteserkreuz drei lange und einen kurzen Arm aufweisen und das erste Stellelement ist vom Mittelpunkt des Malteserkreuzes so weit entfernt dass es nur bei den langen Armen eingreift, nicht jedoch bei dem kurzen.

Somit würde spätestens nach 3 Umdrehungen sichergestellt sein das nun der kurze Arm in Eingriffsposition ist und das 1. Stellelement erreicht diese Position nicht. Ein 2. Stellelement würde dann benötigt werden, um den Verstellkörper aus dieser Nulllage zu bewegen.

In einer weiteren Ausführungsform könnten die Arme eines Malterskreuzes unterschiedliche Höhen haben oder in unterschiedlichen Ebenen senkrecht zur Drehachse des Verstellkörpers liegen.

Bei einer solchen Ausführung würden drei Arme weiter in Richtung Stellelement ragen und einer weniger weit. Hierbei hat das Stellelement drei Positionen. Erste Position ganz eingefahren was bedeutet, dass keiner der Arme des Verstellkörpers interagieren kann.

In der zweiten Position ist das Stellelement teilweise ausgefahren. Drei der vier arme können in Eingriff kommen. Nach spätestens drei Schaltungen ist der Verstellkörper in definierter Position.

In der dritten Stellung ist das Stellelement voll ausgefahren, Alle Arme sind im Eingriff und der Verstellkörper kann aus der Nullposition heraus gefahren werden.

Die vorliegende Erfindung ist weiterhin auf eine Ventilanordnung zum Steuern einer Beaufschlagung von Kunststoffvorformlingen mit Druckluft gerichtet, wobei diese Ventilanordnung wenigstens drei Ventileinrichtungen aufweist, welche dazu geeignet und bestimmt sind, eine Strömungsverbindung zwischen wenigstens drei Druckreservoirs und einer Beaufschlagungseinrichtung zum Beaufschlagen der Kunststoffvorformlingen mit den wenigstens drei Druckstufen herzustellen und/oder zu unterbrechen, wobei ein erster Druck geringer ist als ein zweiter Druck und der zweite Druck geringer ist als der dritte Druck, und wobei wenigstens einer ersten Ventileinrichtung dieser drei Ventileinrichtungen, welche die Zuführung des ersten Druck steuert weiterhin eine Drosseleinrichtung zugeordnet ist, welche dazu geeignet und bestimmt ist, den zu der Beaufschlagungseinrichtung gelangenden ersten Druck zu drosseln.

Bei dem Druckreservoir handelt es sich nicht unbedingt um einen Reservoir sondern dieses kann auch aus Schläuchen, Kanälen oder Rohren gebildet sein. Bei dem Begriff des Reservoirs steht bevorzugt nicht primär die Speicherfähigkeit sondern insbesondere die Gemeinsamkeit (für alle Umformungsstationen) im Vordergrund.

Es wäre denkbar auf Ringkessel oder Ringkanäle zu verzichten und bevorzugt direkt Schläuche zu den Umformungsstationen zu führen. Dabei verbinden jedoch bevorzugt die Schläuche mit T stücken oder zentral Verteiler mindestens 2 Umformungsstationen miteinander, so dass diese drucktechnisch "kommunizieren" können.

Erfindungsgemäß ist die Drosseleinrichtung automatisch einstellbar. Besonders bevorzugt ist die Ventilanordnung in der oben beschriebenen Art und Weise ausgeführt.

Bevorzugt ist die Drosseleinrichtung derart an der Ventilanordnung d.h. dem Ventilblock angeordnet, dass sie leicht erreichbar ist.

Bei einer weiteren bevorzugten Ausführungsform ist an der Drosseleinrichtung eine Kontur oder ein Ansteuerteil angebracht, um die Drosseleinrichtung einfach über diese Kontur verstellen zu können. Besonders bevorzugt ist dabei die Kontur eines Kreuzes, insbesondere eines Malteserkreuzes vorgesehen.

Auf diese Weise kann die Drosseleinrichtung automatisiert verstellt werden, beispielsweise in dem dieses Kreuz sich an einen stehenden Bolzen oder einer Rolle vorbei bewegt, wobei dies, insbesondere wie oben erwähnt, bei der Drehung des Blasrads erfolgt.

Auf diese Weise könnte bei einer Drehung des Blasrads um 360° eine automatisierte Verstellung aller Vorblasdrosseleinrichtungen erreicht werden.

Je nachdem, wo dieser Verstellbolzen angebracht ist (zum Beispiel oben oder unten) kann auch die Drehrichtung beeinflusst werden. Müsste beispielsweise für einen bestimmten Prozess die Drosseleinrichtung von einer Stellung eins auf eine Stellung drei verstellt werden, müsste sich das Blasrad bevorzugt zweimal drehen, da immer nur eine Stellung weiter gedreht werden kann.

Es wäre jedoch auch möglich, hintereinander mehrere Verstellbolzen anzubringen, um gleichzeitig mehrfach verstellen zu können. So könnten beispielsweise zwei solche Verstellbolzen gleichzeitig das Malteserkreuz um zwei Stellungen weiter drehen.

Besonders bevorzugt ist daher die Drosseleinrichtung gestuft verstellbar, d. h. bevorzugt in unterschiedliche Stufen einstellbar.

Da über das oben erwähnte Kreuz die Drosseleinrichtung um ca. 90° weiter gedreht werden kann, können so vier Stellungen bzw. vier Drosselquerschnitte eingestellt und/oder angefahren werden. Je nach Geometrie und Größe des Kreuzes können auch andere Winkelstellungen (beispielsweise 72° oder 60°) realisiert werden und es können mehr Stellungen (zum Beispiel fünf oder sechs oder auch mehr Stellungen) angefahren werden.

Besonders bevorzugt haben, wie oben erwähnt, der oder die Verstellbolzen wenigstens zwei Positionen bzw. Stellungen. Dabei kann eine aktive Stellung vorgesehen sein, um die Drosseleinrichtung zu verstellen und eine passive Stellung, in welcher diese nicht mit der Drosselverstellung und/oder dem Kreuz in Verbindung stehen und somit während der Produktionsphase der Maschine nicht in Aktion sind.

Wie oben erwähnt, erfolgt diese Verstellung bevorzugt über Zylinder und/oder Motoren oder kann auch manuell eingestellt werden.

Bei einer weiteren Ausführungsform wäre auch eine Verstelleinrichtung der Drosseleinrichtung mittels zwei Lineareinheiten, welche beispielsweise elektrisch oder pneumatisch ausgeführt sein können, denkbar. Dabei würde eine erste Lineareinheit einen Verstellbolzen in die aktive Position bringen, um das Verstellelement verstellen zu können, während eine zweite Einheit den Verstellbolzen oder den Verstellkörper linear an dem Verstellelement wie dem Kreuz vorbei bewegt und somit das Kreuz um beispielsweise 90° bewegt.

Anschließend wäre es möglich, dass beide Antriebe in ihre Ausgangsstellung zurückzufahren und man erneut die beschriebenen Bewegungen ausführen könnte.

Dies erfolgt bevorzugt stets bei stehendem Blasrad und einer korrekten Positionierung der zu versteuernden Drosseleinrichtung zur Verstelleinrichtung.

Auf diese Weise könnten auch mehrere Stellungsänderungen hintereinander an der positionierten gleichen Drosseleinrichtung ausgeführt werden. In diesem Falle könnte der Transportträger bzw. das Blasrad immer um eine Blasradteilung weiter takten, um die jeweiligen Drosseleinrichtungen verstellen zu können.

Daneben wäre es auch denkbar, die Verstelleinrichtung über einen Antrieb und ein spezielles Bewegungsgetriebe zu erzeugen, welche gleichzeitig mehrere Bewegungsrichtungen miteinander oder hintereinander ausführen können.

Bei einer weiteren vorteilhaften Ausführungsform weist die Drosseleinrichtung eine Ratscheneinrichtung auf, wobei bevorzugt ein Ansteuerteil bzw. das zweite und/oder das erste Verstellelement wieder in die ursprüngliche Lage zurückkehrt, insbesondere mittels eines elastischen Antriebsteils. Bei einer erneuten Ansteuerung kann die Drossel wiederum um eine Stellung weiter bewegt werden.

Bei einer weiteren vorteilhaften Ausführungsform erfolgt die Verstellung der Drosseleinrichtung mittels eines Roboters, der die jeweilige Drosselverstellung vollautomatisch vollzieht, insbesondere in die jeweils erforderliche Stellung der Drosseleinrichtung.

In einer weiteren vorteilhaften Ausführungsform erfolgt die Verstellung mittels eines Motors. Dieser kann beispielsweise in eine Kontur an der Drosseleinrichtung eingreifen und diese dann um den jeweiligen Winkel verstellen. Besonders bevorzugt ist dieser Motor bzw. die Antriebseinrichtung stationär angeordnet.

Bevorzugt sind die jeweiligen Umformungsstationen derart angeordnet, dass diese dann verstellt werden können. Ein derartiger Motor oder eine Antriebseinrichtung kann aber auch an den Ventilblock angebracht werden, wodurch dann jede Drosseleinrichtung ihren eigenen Antrieb aufweist. Dieser Motor kann elektrisch oder auch pneumatisch angetrieben werden und eventuell eine Steuerungseinrichtung aufweisen, um diesen Motor steuern zu können und um insbesondere um die Winkelstellung individuell anfahren zu können.

Wie oben erwähnt, weist die Vorrichtung weiterhin eine Abfrageeinrichtung auf, welche eine bestimmte Stellung des Verstellelements, beispielsweise eine null-Stellung des Verstellelements feststellen kann oder auch nach einem Stromausfall die jeweilige Stellung wieder auffinden kann.

Bei einer bevorzugten Ausführungsform kann dabei diese Abfrageeinrichtung mittels eines Näherungsschalters oder einer Lichtschranke oder auch mittels einer speziellen Kontur (beispielsweise einer Nocke, Erhöhung oder Vertiefung) die Grundstellung ermitteln oder feststellen.

Daneben ist es auch denkbar, dass die Drosselstellung in eine Ausgangsstellung bewegt wird, beispielsweise mittels einer Kurve oder über die Verstelleinrichtung selbst.

Damit kann die Drosseleinrichtung und insbesondere eine Vorblasdruckdrossel ohne einen Bedienereingriff erfolgen. Bei einem Prozesswechsel oder Rezeptwechsel kann automatisiert die notwendige Einstellung der Verstelleinrichtung und/oder der Drosseleinrichtung selbst erfolgen.

Auf diese Weise entstehen keine Mehraufwände für den Maschinenbediener bzw. dieser kann sich anderen Aufgaben widmen. Ein Rezeptwechsel kann schneller erfolgen, da kein Bedienereingriff notwendig ist. Daneben können auch keine Fehler entstehen dahingehend, dass die Verstellung vergessen wird oder eine falsche Einstellung gewählt wird.

Bei einem weiteren bevorzugten Verfahren werden die Drosseleinrichtung und/oder deren Betrieb und eine Verfahrgeschwindigkeit einer Reckstange und/oder Schaltzeitpunkte, insbesondere Schaltzeitpunkte für die Beaufschlagung mit unterschiedlichen Drücken aufeinander abgestimmt.

Weitere Vorteile und Ausführungsformen ergeben sich aus den beigefügten Zeichnungen:
Darin zeigen:
- Fig. 1: eine schematische Darstellung einer erfindungsgemäßen Vorrichtung;
- Fig. 2: eine Darstellung einer Ventilanordnung in einer ersten Ausführungsform;
- Fig. 3: eine Darstellung einer Ventilanordnung in einer zweiten Ausführungsform;
- Fig. 4: eine Darstellung einer Ventilanordnung in einer dritten Ausführungsform; und
- Fig. 5: eine Detaildarstellung der in Fig. 4 gezeigten Ventilanordnung.

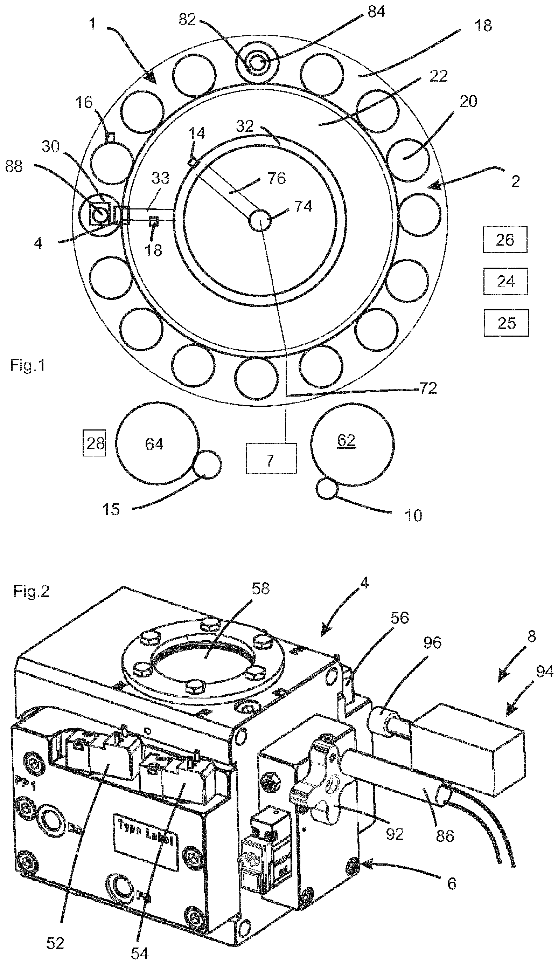

Fig. 1 zeigt eine Vorrichtung 1 zum Umformen von Kunststoffvorformlingen 10 zu Kunststoffbehältnissen 15. Diese Vorrichtung weist eine Transporteinrichtung 2 zum Transportieren der Kunststoffvorformlinge mit einen drehbaren Träger 22 auf, an dem eine Vielzahl von Umformungsstationen 20 angeordnet ist. Diese einzelnen Umformungsstationen weisen jeweils Blasformeinrichtungen 82 auf, die in ihrem Inneren einen Hohlraum zum Expandieren der Kunststoffvorformlinge ausbilden.

Das Bezugszeichen 84 kennzeichnet eine Beaufschlagungseinrichtung, welche zum Expandieren der Kunststoffvorformlinge 10 dient. Hierbei kann es sich beispielsweise um eine Blasdüse handeln, welche an eine Mündung der Kunststoffvorformlinge 10 anlegbar ist, um diese so zu expandieren. Daneben wäre es auch denkbar, dass die Blasdüse an der Blasformeinrichtung abdichtet. Bevorzugt ist diese Beaufschlagungseinrichtung in einer Längsrichtung und bevorzugt ausschließlich in einer Längsrichtung der Kunststoffvorformlinge bewegbar.

Das Bezugszeichen 4 kennzeichnet eine Ventilanordnung wie einen Ventilblock, der bevorzugt eine Vielzahl von Ventilen aufweist, welche die Beaufschlagung der Kunststoffvorformlinge mit unterschiedlichen Druckniveaus steuern. Bevorzugt weist jede Umformungsstation einen derartigen Ventilblock auf.

Bevorzugt ist auch an jeder dieser Ventilanordnungen eine Drosseleinrichtung angeordnet, welche den Strömungsquerschnitt der den Kunststoffvorformlingen unter wenigstens einem Druck zugeführten Druckluft steuert.

Bei einem bevorzugten Verfahren werden die Kunststoffvorformlinge zunächst mit einem Vorblasdruck P1 beaufschlagt, anschließend mit mindestens einem Zwischenblasdruck Pi, der höher ist als der Vorblasdruck und schließlich mit einem Fertigblasdruck P2, der höher ist als der Zwischenblasdruck Pi1. Besonders bevorzugt werden die Kunststoffvorformlinge mit einem weiteren Zwischenblasdruck Pi2 beaufschlagt, der größer ist als der Druck Pi1 jedoch kleiner als der Druck P2.

Nach der Expansion der Kunststoffbehältnisse werden bevorzugt die Drücke bzw. die Druckluft wieder von dem Behältnis in die einzelnen Druckreservoirs zurückgeführt und insbesondere einem Druckreservoir mit geringerem Druckniveau zurückgeführt.

Bevorzugt weist die Vorrichtung daher eine Luftrecyceleinrichtung auf, welche dazu geeignet und bestimmt ist, Druckluft von den einzelnen Umformungsstationen in Druckluftreservoirs, insbesondere solche Druckluftreservoirs, welche ein geringeres Druckniveau aufnehmen, zurückzuführen.

Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82 sowie Reckstangen 88 auf. Diese Reckstange ist bevorzugt Bestandteil einer mit 30 bezeichneten Reckeinrichtung. Die Reckstange ist (bevorzugt ebenfalls ausschließlich) in der Längsrichtung der Kunststoffvorformlinge 10 beweglich.

Bevorzugt liegt die Anzahl dieser Umformungsstationen 4 zwischen 2 und 100, bevorzugt zwischen 4 und 60, bevorzugt zwischen 6 und 40.

Die Kunststoffvorformlinge 10 werden über eine erste Transporteinrichtung 62 wie insbesondere aber nicht ausschließlich einen Transportstern der Vorrichtung zugeführt. Über eine zweite Transporteinrichtung 64 werden die Kunststoffbehältnisse 15 abtransportiert.

Das Bezugszeichen 7 kennzeichnet eine Druckbereitstellungseinrichtung wie etwa einen Kompressor oder auch einen Druckluftanschluss. Die Druckluft wird über eine Verbindungsleitung 72 zu einem Drehverteiler 74 gefördert und von diesem über eine weitere Leitung 76 an das erste Druckluftreservoir 32 angegeben, bei dem es sich hier um einen Ringkanal handelt.

Damit dient bevorzugt dieser Drehverteiler zu dem Zweck, Luft von einem stationären Teil der Vorrichtung in einen sich drehenden Teil der Vorrichtung zu führen.

Neben diesem dargestellten Ringkanal 32 sind bevorzugt noch weitere Ringkanäle vorgesehen, die in der in Fig. 1 gezeigten Darstellung jedoch durch den Ringkanal 32 verdeckt sind, beispielsweise darunterliegen. So ist bevorzugt je ein Druckreservoir zur Speicherung des Drucks P2 sowie der Zwischenblasdrücke Pi1 und Pi2 und des Drucks P1 vorhanden.

Das Bezugszeichen 33 kennzeichnet eine Verbindungsleitung, welche die Druckluft an eine Umformungsstation 20 bzw. deren Ventilblock 4 abgibt. Bevorzugt ist jeder der Ringkanäle über entsprechende Verbindungsleitungen mit sämtlichen Umformungsstationen verbunden. Diese Verbindungsleitung 33 ist bevorzugt in dem drehenden Teil der Vorrichtung angeordnet.

Das Bezugszeichen 18 kennzeichnet schematisch einen optionalen Reinraum, der hier bevorzugt ringförmig ausgebildet ist und den Transportpfad der Kunststoffvorformlinge 10 umgibt. Bevorzugt ist eine (geometrische) Drehachse bezüglich derer der Transportträger 22 drehbar ist, außerhalb des Reinraums 18 angeordnet. Bevorzugt ist der Reinraum mit einer Dichtungseinrichtung, welche bevorzugt wenigstens zwei Wasserschlösser aufweist, gegenüber der unsterilen Umgebung abgedichtet.

Weiterhin weist die Vorrichtung bevorzugt eine (in Fig. 1 nicht gezeigte) Deckeleinrichtung auf, welche den Reinraum 18 nach oben hin begrenzt. Diese Deckeleinrichtung ist dabei bevorzugt an wenigstens einer der Reckeinrichtungen 30 angeordnet.

Die Vorrichtung weist eine Vielzahl von Mess- und/oder Sensoreinrichtungen auf, welche zur Steuerung der Vorrichtung dienen. Das Bezugszeichen 14 kennzeichnet eine Druckmesseinrichtung, welche einen Luftdruck innerhalb des Druckluftreservoirs 32 misst. Bevorzugt weisen auch die übrigen Druckluftreservoirs entsprechende Druckmesseinrichtungen auf.

Das Bezugszeichen 16 kennzeichnet eine weitere Druckmesseinrichtung, welche einen Luftdruck insbesondere einen Behältnisinnendruck des zu expandierenden Kunststoffvorformlings misst. Bevorzugt ist jeder Umformungsstation eine solche Druckmesseinrichtung zugeordnet.

Das Bezugszeichen 18 kennzeichnet ebenfalls schematisch eine Durchflussmesseinrichtung, welche einen Durchfluss der Blasluft von einem Druckluftreservoir zu dem Ventilblock 4 einer Umformungsstation 20 bestimmt. Bevorzugt sind entsprechende Durchflussmesseinrichtungen jeweils zwischen einem Druckluftreservoir und allen Umformungsstationen angeordnet.

Auch zwischen den weiteren Druckluftreservoirs und den jeweiligen Umformungsstationen können weitere Durchflussmesseinrichtungen zugeordnet sein.

Weiterhin sind bevorzugt auch Positionserfassungseinrichtungen vorgesehen, welche Positionen der Reckstangen der einzelnen Umformungsstationen erfassen können.

Das Bezugszeichen 24 kennzeichnet eine Steuerungseinrichtung, welche die Vorrichtung 1 steuert und insbesondere regelt. Diese Steuerungseinrichtung ist dabei bevorzugt auch in der Lage, Arbeitsparameter der Vorrichtung und insbesondere Einstellungen der Drosseleinrichtung zu ändern.

So steuert die Steuerungseinrichtung insbesondere die einzelnen Ventile und damit die Beaufschlagung der Kunststoffvorformlinge mit den einzelnen Druckniveaus. Daneben steuert die Steuerungseinrichtung bevorzugt auch eine Bewegung der Reckstangen der einzelnen Umformungsstationen. Bevorzugt steuert die Steuerungseinrichtung auch Bewegungen der Beaufschlagungseinrichtungen d.h. der Blasdüsen. Wie erwähnt kann diese Steuerungseinrichtung bevorzugt auch die Einstellungen der einzelnen Drosseleinrichtungen einstellen.

Die Steuerungseinrichtung ist bevorzugt dazu geeignet, die Zeitpunkte, zu denen die Beaufschlagungseinrichtungen an die Kunststoffvorformlinge angelegt werden und/oder die Zeitpunkte, zu denen die Blasformeinrichtungen wieder von den Kunststoffvorformlingen abgehoben werden zu steuern und insbesondere auch, diese Zeitpunkte zu verändern.

Das Bezugszeichen 26 kennzeichnet eine Speichereinrichtung, in der insbesondere Messgrößen erfasst werden, insbesondere Druckwerte und Durchflusswerte, aber auch entsprechende Arbeitsparameter. Bevorzugt werden diese jeweiligen Werte mit einer zeitlichen Zuordnung gespeichert.

Bevorzugt können diese Werte kontinuierlich und insbesondere über lange Zeiträume eines Maschinenbetriebs gespeichert. Die Steuerungseinrichtung steuert bzw. regelt auch unter Berücksichtigung dieser aufgenommenen Messwerte die Vorrichtung.

Das Bezugszeichen 28 kennzeichnet grob schematisch eine Inspektionseinrichtung zum Inspizieren der gefertigten Behältnisse.

Das Bezugszeichen 25 kennzeichnet eine Anzeigeeinrichtung, welche zur Ausgabe von Informationen an einen Maschinenbediener dient. Mittels dieser Anzeigeeinrichtung können etwa gemessene Druck-(verlaufs)kurven ausgegeben werden.

Fig. 2 zeigt eine Ventilanordnung in einer ersten Ausführungsform. Dabei bezieht sich das Bezugszeichen 4 auf die Ventilanordnung in ihrer Gesamtheit. Die Bezugszeichen 52 und 54 sowie 56 beziehen sich auf hier drei Ventileinrichtungen, die zur Steuerung der Beaufschlagung des Drucks auf die Kunststoffvorformlinge dienen. Das Bezugszeichen 58 kennzeichnet eine Öffnung, durch welche ein Träger hindurchgeführt wird, aber auch bevorzugt die Reckstangeneinrichtung und die Beaufschlagungseinrichtung.

Das Bezugszeichen 6 kennzeichnet eine Drosseleinrichtung, die zum Drosseln des Volumenstroms, der durch die erste Ventileinrichtung strömt, dient.

Das Bezugszeichen 8 kennzeichnet in seiner Gesamtheit eine Verstelleinrichtung zum automatischen Verstellen der Drosseleinrichtung.

Hierzu ist ein erstes Verstellelement 92 hier in Form eines drehbaren Kreuzes und insbesondere eines Malteserkreuzes an der Drosseleinrichtung 6 angeordnet, um diese zu verstellen.

Das Bezugszeichen 94 kennzeichnet ein zweites Verstellelement. Dieses zweite Verstellelement weist einen Verstellkörper oder -bolzen 96 auf, der linear bewegbar ist zwischen einer Stellung, in der das erste Verstellelement 92 weiter gedreht werden kann und einer zweiten Stellung, in der kein Eingriff mit dem ersten Verstellelement 92 erfolgt.

Das Bezugszeichen 86 kennzeichnet eine Abfrageeinrichtung oder eine Erfassungseinrichtung, welche eine Stellung des ersten Verstellelements erfassen kann.

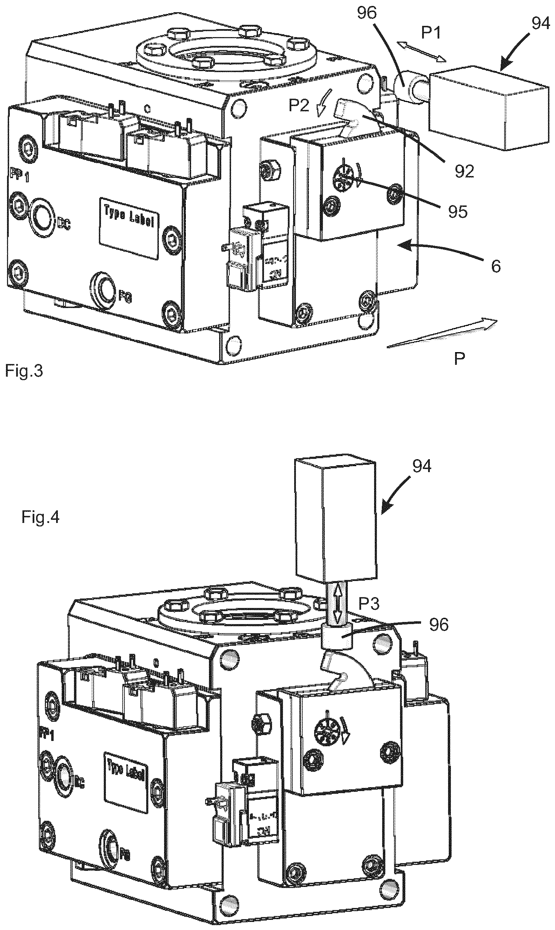

Fig. 3 zeigt eine weitere Ausgestaltung der Ventilanordnung 4. Hier ist das Verstellelement 92 in Form eines Bügels ausgeführt, der mit einer (nicht gezeigten) Ratscheneinrichtung verbunden ist. Durch einmaliges Bewegen des Verstellelements kann die Drosseleinrichtung in eine weitere Position gefahren werden.

Man erkennt, dass der Verstellkörper 92 entlang der linearen Richtung P2 bewegbar ist. Das Bezugszeichen P1 kennzeichnet die Bewegung der Ventilanordnung 4, welche wie oben erwähnt, insbesondere kreisförmig ist. Durch diese Bewegung wird letztlich die Verstellung der Drosseleinrichtung 8 bewirkt.

Fig. 4 zeigt eine weitere Ausgestaltung der Ventilanordnung. Im Unterschied zu der in Fig. 3 gezeigten Ausgestaltung ist hier die Verstelleinrichtung bzw. das zweite Verstellelement 94 oberhalb der Ventilanordnung 8 angeordnet und der Verstellkörper bzw. das erste Verstellelement 92 ist in der hier vertikalen Richtung B3 bewegbar. Das Bezugszeichen 95 kennzeichnet eine Anzeigeeinrichtung, welche die Position der Drosseleinrichtung anzeigt.

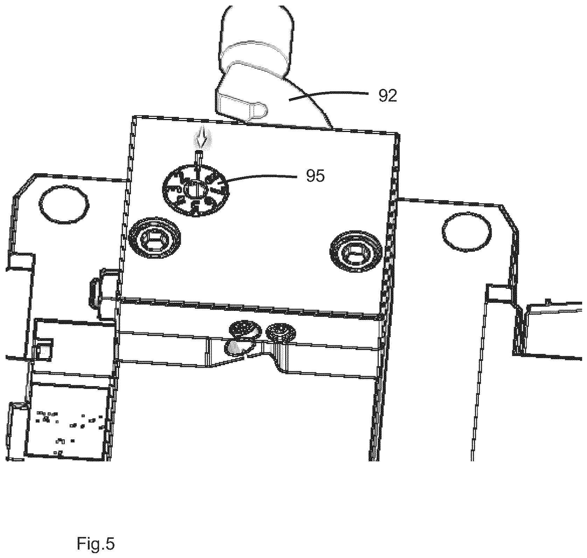

Fig. 5 ist eine Detaildarstellung der in Fig. 4 gezeigten Darstellung. Auch hier ist wieder die Anzeigeneinrichtung erkennbar, aus der sich ergibt, dass hier die Drosseleinrichtung in acht verschiedenen Stellungen schaltbar ist. Auch ist wieder der Verstellkörper gezeigt, der eine Bewegung des ersten Verstellelements 92 und damit eine Verstellung der Drosseleinrichtung bewirkt.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Umformen von Kunststoffvorformlingen (10) zu Kunststoffbehältnissen (15), mit einer Transporteinrichtung (2), welche die Kunststoffvorformlinge (10) entlang eines vorgegebenen Transportpfads transportiert, wobei die Transporteinrichtung (2) einen Transportträger (22) aufweist, welcher eine Vielzahl von Umformungsstationen (20) zum Umformen der Kunststoffvorformlinge (10) aufweist, wobei diese Umformungsstationen jeweils Beaufschlagungseinrichtungen (84) aufweisen, welche die Kunststoffvorformlinge zu ihrer Expansion mit einem fließfähigen und insbesondere gasförmigen Medium beaufschlagen und wobei die Vorrichtung (1) wenigstens ein erstes Druckluftreservoir (32) aufweist, welches dazu geeignet und bestimmt ist, Druckluft unter einem ersten vorgegebenen Druck (p1) bereitzustellen sowie ein zweites Druckluftreservoir, welches dazu geeignet und bestimmt ist, Druckluft unter einem zweiten vorgegebenen Druck (p2) bereitzustellen und jede Umformungsstation (20) eine Ventilanordnung (4) mit einer Vielzahl von Ventileinrichtungen (52, 54) aufweist, um die Kunststoffvorformlinge mit den wenigstens zwei Drücken zu beaufschlagen und wobei die Umformungsstationen jeweils wenigstens eine Drosseleinrichtung (6) aufweisen, welche dazu geeignet und bestimmt ist den Volumenstrom des gasförmigen Mediums zu den Kunststoffvorformlingen (10) zu drosseln,
**dadurch gekennzeichnet, dass**
die Drosseleinrichtung (6) automatisch verstellbar ist.

2. Vorrichtung (1) nach Anspruch 1,
**dadurch gekennzeichnet, dass**
der erste Druck (p1) geringer ist als der zweite vorgegebene Druck (p2) und die Drosseleinrichtung (6) dem ersten Druck zugeordnet ist.

3. Vorrichtung nach wenigstens einem der vorangegangenen Ansprüche,
**dadurch gekennzeichnet, dass**
die Umformungsstationen (20) jeweils in die Kunststoffvorformlinge einführbare stangenartige Körper (88) zum Dehnen der Kunststoffvorformlinge (10) in deren Längsrichtung aufweisen.

4. Vorrichtung nach wenigstens einem der vorangegangenen Ansprüche,
**dadurch gekennzeichnet, dass**
die Vorrichtung ein drittes Druckluftreservoir aufweist, welches dazu geeignet und bestimmt ist, Druckluft unter einem dritten vorgegebenen Druck (pi) zu speichern, wobei dieser dritte Druck höher ist als der erste Druck (p1).

5. Vorrichtung nach wenigstens einem der vorangegangenen Ansprüche,
**dadurch gekennzeichnet, dass**
die Vorrichtung eine Verstelleinrichtung (8) zum automatischen Verstellen der Drosseleinrichtungen aufweist, wobei bevorzugt jeder Umformungsstation ein erstes Verstellelement (92) zugeordnet ist.

6. Vorrichtung (1) nach dem vorangegangenen Anspruch,
**dadurch gekennzeichnet, dass**
die Vorrichtung (1) und insbesondere die Verstelleinrichtung (8) ein zweites Verstellelement (94) aufweist, welches zum Verstellen der Drosseleinrichtung (6) mit den ersten Verstellelementen (92) zusammenwirkt.

7. Vorrichtung nach wenigstens einem der vorangegangenen Ansprüche 5 oder 6, **dadurch gekennzeichnet, dass**
das zweite Verstellelement mit mindestens zwei ersten Verstellelementen unterschiedlicher Umformungsstationen zusammenwirken kann und bevorzugt mit allen ersten Verstellelementen aller Umformungsstationen.

8. Vorrichtung nach wenigstens einem der vorangegangenen Ansprüche,
**dadurch gekennzeichnet, dass**
die Verstellung der Drosseleinrichtungen unter Verwendung der Drehbewegung des Transportträgers (22) durchführbar ist.

9. Vorrichtung nach wenigstens einem der vorangegangenen Ansprüche 4 - 6,
**dadurch gekennzeichnet, dass**
das erste Verstellelement (92) bezüglich einer vorgegebenen Achse dreh- oder schwenkbar ist.

10. Vorrichtung nach Anspruch 8,
**dadurch gekennzeichnet, dass**
das zweite Verstellelement (94) eine Antriebseinrichtung aufweist, welche dazu geeignet und bestimmt ist, einen Verstellkörper (96) des zweiten Verstellelements (94) zu bewegen.

11. Ventilanordnung (4) zum Steuern einer Beaufschlagung von Kunststoffvorformlingen mit Druckluft, wobei diese Ventilanordnung (4) wenigstens drei Ventileinrichtungen (52, 54, 56) aufweist, welche dazu geeignet und bestimmt sind eine Strömungsverbindung zwischen wenigstens drei Druckreservoirs (32) und einer Beaufschlagungseinrichtung zum Beaufschlagen der Kunststoffvorformlinge mit wenigstens drei unterschiedlichen Druckstufen (p1, pi, p2) herzustellen und/oder zu unterbrechen, wobei ein erster Druck (p1) geringer ist als ein zweiter Druck (pi) und der zweite Druck geringer ist als der dritte Druck und wobei wenigstens einer ersten Ventileinrichtung (52) dieser drei Ventileinrichtungen, welche die Zuführung des ersten Drucks (P1) steuert weiterhin eine Drosseleinrichtung (6) zugeordnet ist, welche dazu geeignet und bestimmt ist, den zu der Beaufschlagungseinrichtung gelangenden ersten Druck (p1) und insbesondere den Volumenstrom zu drosseln,
**dadurch gekennzeichnet, dass**
die Drosseleinrichtung (6) automatisch einstellbar ist.

12. Verfahren zum Umformen von Kunststoffvorformlingen (10) zu Kunststoffbehältnissen, wobei eine Transporteinrichtung (2) die Kunststoffvorformlinge (10) entlang eines vorgegebenen Transportpfads (P) transportiert, wobei die Transporteinrichtung (2) einen Transportträger (22) aufweist, an dem eine Vielzahl von Umformungsstationen (20) zum Umformen der Kunststoffvorformlinge (10) angeordnet ist, wobei diese Umformungsstationen jeweils Beaufschlagungseinrichtungen (84) aufweisen, welche die Kunststoffvorformlinge (10) zu ihrer Expansion mit einem fließfähigen und insbesondere gasförmigen Medium beaufschlagen und wobei die Vorrichtung (1) wenigstens ein erstes Druckluftreservoir (32) aufweist, welches Druckluft unter einem ersten vorgegebenen Druck speichert und/oder bereitstellt sowie ein zweites Druckluftreservoir, welches Druckluft unter einem zweiten vorgegebenen Druck (p2) speichert und/oder bereitstellt und jede Umformungsstation (20) eine Ventilanordnung (4) mit einer Vielzahl von Ventileinrichtungen (52, 54) aufweist, um die Kunststoffvorformlinge mit den wenigstens zwei Drücken zu beaufschlagen und wobei die Umformungsstationen jeweils wenigstens eine Drosseleinrichtung (6) aufweist, welche den Volumenstrom zu den Kunststoffvorformlingen drosselt,
**dadurch gekennzeichnet, dass**
die Drosseleinrichtung (6) automatisch verstellt wird.

13. Verfahren nach dem vorangegangenen Anspruch,
**dadurch gekennzeichnet, dass**
die Drosseleinrichtung und eine Verfahrgeschwindigkeit der Reckstange und/oder die Schaltzeitpunkte der Ventile aufeinander abgestimmt werden.
